# DEMANDE DE BREVET EUROPEEN

(11) **EP 0 927 841 A1**
(43) Date de publication de la demande: **07.07.1999**
(21) Numéro de dépôt: 99400005.7
(22) Date de dépôt: 04.01.1999
(51) Int. Cl.: F16J 9/20

(54) **Segment de piston, en particulier pour moteur à combustion interne**

(30) Priorité: 05.01.1998 FR 9800014
(71) Demandeur: PERFECT CIRCLE EUROPE, 78300 Poissy (FR)
(72) Inventeur: Fefeu, Michel Alain, 78114 Magny les Hameaux (FR)
(74) Mandataire: Picard, Jean-Claude Georges

(57) **Abrégé**

Chaque bande 8 du segment comporte, à partir de sa portée 10 sur le cylindre 7, un chanfrein 11, un premier palier 13, une section d'épaisseur décroissante 15 et un second palier 16 d'épaisseur sensiblement inférieure à celle du premier palier.

Grâce à ces dispositions on augmente considérablement la durée de vie du segment, en retardant le moment de l'apparition d'une augmentation sensible de la consommation d'huile à la fin de la durée de vie du segment.

## Description

La présente invention concerne un segment de piston, en particulier pour moteur à combustion interne, du type comportant au moins une bande circulaire mince dont le bord périphérique est destiné à assurer l'étanchéité aux gaz et/ou à l'huile par son contact avec la paroi intérieure du cylindre, cette bande présentant dans son épaisseur et à proximité dudit bord un biseau périphérique selon lequel l'épaisseur de la bande augmente depuis ledit bord jusqu'à un premier contour circulaire situé à une certaine distance radiale dudit bord.

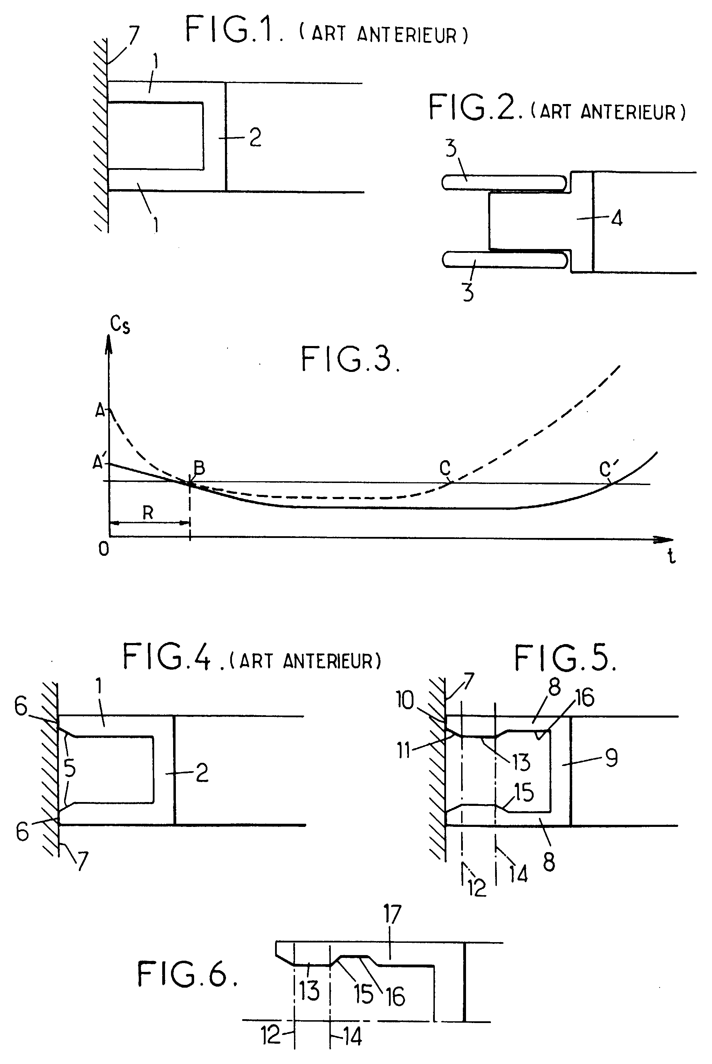

Les segments classiques à section transversale en U monoblocs connus sous la dénomination "U-FLEX" (voir figure 1 des dessins ci-annexés) comprennent deux bandes circulaires minces et parallèles 1 d'épaisseur constante, reliées par un fond 2. D'autres segments sont constitués de trois pièces, à savoir deux bandes minces et parallèles ou "rails" 3 d'épaisseur constante, séparées par un "spacer" 4 (voir figure 2). L'inconvénient de ces segments à bandes d'étanchéité d'épaisseur constante réside dans une consommation d'huile relativement importante pendant le rodage. Une courbe typique de la consommation Cs d'huile en fonction du temps t est représentée en trait interrompu à la figure 3. La partie de la courbe comprise entre les points A et B correspond au rodage du moteur, de durée plus ou moins longue, pendant laquelle le moteur ne peut satisfaire les normes antipollution ; la partie de la courbe comprise entre les points B et C correspond à la durée de vie normale du moteur, où la consommation d'huile est conforme aux objectifs. Enfin, au-delà du point C la consommation recommence à croître en raison de l'usure du moteur et en particulier des segments et du cylindre et jusqu'à sa mise hors service, et également en raison du fait que la pression exercée par la portée du segment sur le cylindre diminue en même temps que le diamètre extérieur du segment et en même temps que le diamètre du cylindre augmente.

Ceci étant, la raison d'être des biseaux périphériques mentionnés plus haut est de diminuer l'ordonnée du point A ainsi que la durée R du rodage. De tels biseaux ont été représentés en 5 à la figure 4, sur un segment de type U-FLEX.

Cette disposition permet d'obtenir :
- une pression plus élevée du bord périphérique 6 des bandes 1 sur la paroi intérieure 7 du cylindre pendant la période de rodage, et donc une augmentation de l'étanchéité du segment ;
- une usure plus rapide du segment au début de sa durée de vie, permettant de diminuer la période de rodage.

Tout en conservant cet avantage de la technique antérieure, le but de la présente invention est de retarder l'arrivée de la situation correspondant au point C de la figure 3, et d'obtenir à partir de cette situation plus tardive une consommation d'huile plus faible en fin de vie du segment.

A cet effet, un segment de piston du type général défini au début est caractérisé en ce que l'épaisseur de ladite bande comporte un premier palier entre ledit premier contour circulaire et un second contour circulaire intérieur au premier contour, et en ce que ce premier palier est suivi, en direction du centre de ladite bande, par une section d'épaisseur décroissante, elle-même suivie, en direction du centre de ladite bande, par un second palier, d'épaisseur inférieure à celle du premier palier.

De préférence, ledit premier palier est d'épaisseur au moins approximativement constante, et il en est de même pour le second palier.

Grâce à ces dispositions de l'invention, on obtient, pour la durée de vie du segment, les différentes étapes suivantes :
1°) le rodage, de durée diminuée, avec une consommation d'huile relativement faible, pendant la période d'usure du biseau périphérique, comme dans la technique connue ;
2°) la durée d'usure normale du segment, correspondant à l'usure du premier palier, d'épaisseur constante ou approximativement constante, ceci pendant la majeure partie de la durée de vie du segment ;
3°) une durée de vie prolongée en fin d'usure du segment, pendant l'usure de ladite section d'épaisseur décroissante puis pendant l'usure du second palier, ce qui constitue l'avantage essentiel de la présente invention.

En effet, la tension du segment diminue, donc la force exercée par sa portée sur la paroi intérieure du cylindre diminue pendant toute cette troisième partie de la durée de vie du segment, mais ce phénomène est compensé dans une certaine mesure par la diminution de l'épaisseur du segment, qui permet une compensation de la diminution de l'effort en augmentant la pression qu'il exerce sur la paroi intérieure du cylindre et en maintenant au moins cette pression à un niveau suffisant pour garantir une étanchéité satisfaisante, donc une consommation d'huile acceptable.

Une forme de réalisation de l'invention est représentée à titre d'exemple nullement limitatif à la figure 5 du dessin ci-annexé, ainsi qu'à la figure 6, qui est une variante.

Sur cette figure on a représenté une vue en coupe transversale partielle d'un segment de type U-FLEX analogue à celui de la figure 4 et modifié conformément à la présente invention. Sur la figure 5, on a référencé en 8 les deux bandes du segment, reliées l'une à l'autre par un fond 9. Chaque bande se termine à son bord périphérique par une portée 10 suivie d'un biseau périphérique 11 selon lequel l'épaisseur de la bande augmente jusqu'à un premier contour circulaire repéré par la ligne en trait mixte 12. L'épaisseur de chaque bande comporte ensuite un premier palier 13, par exemple d'épaisseur constante, s'étendant entre le premier contour circulaire 12 et un second contour circulaire, intérieur au précédent, repéré par la ligne en trait mixte 14. Le premier palier 13 est suivi, toujours vers l'intérieur du segment, par une section d'épaisseur décroissante 15, encore suivie par un second palier 16 d'épaisseur, par exemple également constante, sensiblement inférieure ou égale à celle du premier palier 13.

Grâce à ce type de dispositions, on peut obtenir, en fonction du temps, la courbe de consommation d'huile représentée en trait continu à la figure 3. On voit que grâce au chanfrein connu 11 la consommation d'huile initiale (point A') est diminuée et est plus faible, pendant la période de rodage R, qu'avec les segments dépourvus de chanfreins. Au point D de la courbe, qui correspond approximativement au degré d'usure qui permet de parvenir à la section d'épaisseur décroissante 15, la consommation n'augmente pas sensiblement, comme cela se produit au point C des segments de la technique antérieure ; l'augmentation de la consommation d'huile ne reprend qu'en C', après usure partielle du second palier 16.

On voit que la durée de vie du segment est notablement augmentée (durée CC') grâce à l'invention.

La figure 6 représente une variante selon laquelle le second palier 16 est suivi par un troisième palier 17 d'épaisseur égale ou supérieure à celle du premier palier 13, ceci pour assurer la tension du segment.

D'autres variantes sont bien entendu possibles, sans sortir du cadre de l'invention.

## Revendications

1. Segment de piston, en particulier pour moteur à combustion interne, du type comportant au moins une bande circulaire mince (8) dont le bord périphérique (10) est destiné à assurer l'étanchéité aux gaz et/ou à l'huile par son contact avec la paroi intérieure (7) du cylindre, cette bande présentant dans son épaisseur et à proximité dudit bord (10) un biseau périphérique (11) selon lequel l'épaisseur de la bande (8) augmente depuis ledit bord jusqu'à un premier contour circulaire (12) situé à une certaine distance radiale dudit bord, caractérisé en ce que l'épaisseur de ladite bande (8) comporte un premier palier (13) entre ledit premier contour circulaire (12) et un second contour circulaire (14) intérieur au premier contour, et en ce que ce premier palier (13) est suivi, en direction du centre de ladite bande, par une section d'épaisseur décroissante (15), elle-même suivie, également en direction du centre de ladite bande, par un second palier (16), d'épaisseur inférieure à celle du premier palier (13).

2. Segment selon la revendication 1, caractérisé en ce que ledit premier palier (13) est d'épaisseur au moins approximativement constante.

3. Segment selon la revendication 1 ou 2, caractérisé en ce que ledit second palier (16) est d'épaisseur au moins approximativement constante.

4. Segment selon l'une quelconque des revendications précédentes, caractérisé en ce que ledit second palier (16) est suivi par un troisième palier (17) d'épaisseur au moins égale à celle du premier palier (13).
